# EUROPÄISCHE PATENTSCHRIFT

(11) **EP 4 257 513 B1**
(45) Veröffentlichungstag und Bekanntmachung des Hinweises auf die Patenterteilung: **26.06.2024**
(21) Anmeldenummer: 22215032.8
(22) Anmeldetag: 20.12.2022
(51) Int. Cl.: B65D 83/08

(54) **BACKPAPIERSPENDER**
BACKING PAPER DISPENSER
DISTRIBUTEUR DE PAPIER DE CUISSON

(30) Priorität: 25.03.2022 CH 3302022
(43) Veröffentlichungstag der Anmeldung: 11.10.2023
(73) Patentinhaber: star foil-systems ag, 8280 Kreuzlingen (CH)
(72) Erfinder: Forrer, Beat, 8592 Uttwil (CH)
(74) Vertreter: Frei Patent Attorneys

(56) Entgegenhaltungen:
- WO-A1-2016/205735
- CA-A- 662 873
- CH-B1- 700 942
- DE-U1-202011 109 420
- US-A1- 2004 169 047

## Beschreibung

Die Erfindung betrifft einen Backpapierspender gemäss dem Oberbegriff des Patentanspruchs 1.

Es ist bekannt, Backpapier in Form gestapelter Bogen oder in Form eines aufgerollten Bandes in einem Spendergehäuse zu lagern. Backpapier für kommerzielle Anwendungen, z.B. in Bäckereien oder Gastrobetrieben, wird verbreitet in Form gestapelter Bogen in Verpackungen aus Karton bzw. Wellpappe gelagert, die am Einsatzort als Spendergehäuse genutzt werden können. Solche Bogen sind insbesondere in gebräuchlichen Massen von z.B. 64cm x 52cm oder 53cm x 32.5cm erhältlich. Die zugehörigen Verpackungen sind entsprechend gross und sperrig.

Aus der CH 700 942 B1 ist ein Backpapierspender bekannt, gemäss dem Oberbegriff des unabhängigen Anspruchs 1, bei dem mindestens ein Stapel Backpapierbogen umgeschlagen um eine stabile Einlage in einem Behälter aus Pappe oder Wellpappe gelagert ist. Durch eine an der obenliegenden Hauptseite des Behälters angeordnete Entnahmeöffnung kann der Endbereich des obersten Bogens ergriffen und aus dem Behälter herausgezogen werden. Der um die entfernt zur Entnahmeöffnung angeordnete Kante der losen Einlage umgeschlagene Stapel drückt dabei die Einlage gegen die an die Entnahmeöffnung angrenzende Schmalseite des Behälters. Da die Backpapierbogen eine haftungshemmende Beschichtung aus Silikon haben, ist es möglich, einzelne Bogen aus dem Behälter herauszuziehen. Die Reibung zwischen benachbarten Bogen eines Stapels ist bei schweren Stapeln mit vielen Bogen grösser als bei kleinen Stapeln mit weniger Bogen. Bei grösseren Stapeln kann dies beim Herausziehen eines Bogens aus dem Behälter bewirken, dass weitere Bogen mitgerissen werden. Um dies zu verhindern können im Behälter mehrere durch Trennplatten getrennte Stapel angeordnet werden, wobei jeder Stapel um eine individuelle Einlage umgeschlagen ist.

Obwohl die in CH 700 942 B1 offenbarten Backpapierspender Behälter umfassen, deren Länge nur etwa der Hälfte der Länge der jeweiligen Backpapierbogen entspricht, sind diese Behälter immer noch vergleichsweise gross und sperrig, sodass sie am jeweiligen Einsatzort die Nutzung von Arbeitsflächen beeinträchtigen können.

Eine Aufgabe der Erfindung liegt deshalb darin, einen kompakten Backpapierspender zu schaffen der ein einfaches Entnehmen einzelner Backpapierbogen ermöglicht.

Diese Aufgabe wird gelöst durch einen Backpapierspender mit den Merkmalen des Patentanspruchs 1.

Der Backpapierspender, auch kurz Spender genannt, umfasst einen Behälter, vorzugsweise eine Faltschachtel aus Karton oder Wellkarton, und einen in diesem Behälter gelagerten Stapel Backpapierbogen, der mindestens zweifach umgeschlagen im Behälter gelagert ist. Solche Behälter haben vergleichsweise kleine Aussenabmessungen und können auch an Orten mit beschränkten Platzverhältnissen verwendet werden. Sie haben zudem die Funktion einer platzsparenden Verpackung für den Transport und die Lagerung des Backpapiers.

Jeder Spender umfasst eine Entnahmeöffnung, durch die Backpapierbogen einzeln aus dem Behälter entnommen werden können. Der Behälter kann einen Erstnutzungsschutz umfassen, beispielsweise einen abtrennbaren Bereich, der die Entnahmeöffnung vor der ersten Nutzung verschliesst. Solche Behälter, insbesondere Faltschachteln, sind aus dem Stand der Technik bekannt. Die Entnahmeöffnung ist benachbart zu einem konvex gebogenen Umschlagbereich des Backpapierstapels angeordnet und erstreckt sich über die gesamte Länge des Behälters.

Der in diesem Umschlagbereich äusserste Backpapierbogen kann durch die Entnahmeöffnung hindurch ergriffen und aus dem Behälter herausgezogen werden. Zumindest auf einer der beiden Längsseiten der Entnahmeöffnung umfasst der Behälter einen Anschlag. Dieser Anschlag ist ein Hindernis für Abschnitte des Backpapierstapels, die neben dem durch die Entnahmeöffnung ergreifbaren umgeschlagenen Abschnitt im Behälter angeordnet sind. Beim Herausziehen eines Backpapierbogens wird der Stapel durch Anlage an solchen Anschlägen im Behälter zurückgehalten. Vorzugsweise ist jeder Anschlag ein Abschnitt einer Behälterwand, welche die Entnahmeöffnung begrenzt.

Die Backpapierbogen haben gute Gleiteigenschaften bzw. eine geringe gegenseitige Reibung, da sie zumindest einseitig mit einem entsprechenden Material wie z.B. Silikon beschichtet sind. Der jeweils ergriffene äusserste Backpapierbogen kann deshalb leicht vom Stapel vereinzelt und durch die Entnahmeöffnung aus dem Behälter herausgezogen werden.

Vorzugsweise ist der Backpapierstapel in den umgeschlagenen Bereichen innerhalb des Behälters gebogen, sodass die Backpapierbogen keine scharfen Knickkanten aufweisen. Jeder Backpapierbogen hat biegeelastische Eigenschaften. Beim Umschlagen von Abschnitten des Stapels bewirken elastische Rückstellkräfte der Backpapierbogen, dass benachbarte Abschnitte des Stapels bei den Umschlagbereichen soweit auseinandergedrängt werden, wie dies der beschränkte Bewegungsspielraum innerhalb des Behälters zulässt. Angrenzend an die Umschlagbereiche ist deshalb der Abstand zwischen benachbarten Stapelabschnitten maximal. Im Umschlagbereich nehmen auch die Biegeradien der einzelnen Backpapierbogen sowie der innere und der äussere Biegeradius des Stapels ihre grösstmöglichen Werte ein.

Jeder Backpapierbogen nimmt nach dem Entnehmen aus dem Behälter aufgrund seiner elastischen Rückstellkraft zumindest näherungsweise wieder seine ursprüngliche flache Gestalt an. Die Handhabung solcher Backpapierbogen ist deshalb vergleichsweise einfach. Sie haben nach dem Entnehmen aus dem Behälter keine störenden Erhebungen mit lokal grossen Steigungen und können einfach auf ebene Oberflächen aufgelegt werden.

Vorzugsweise ist der Backpapierstapel bei zwei oder mehreren aufeinanderfolgenden Umschlagbereichen alternierend konvex und konkav umgeschlagen. Dies bewirkt, dass dem Behälter entnommene Backpapierbogen in der Regel nur eine leichte Restwelligkeit aufweisen, sich jedoch nicht in unerwünschter Weise zusammenrollen können. Im Weiteren kann bei solchen Anordnungen der jeweils äusserste Backpapierbogen besser vom Stapel gelöst und einzeln durch die Entnahmeöffnung herausgezogen werden. Im entfernt zur Entnahmeöffnung angeordneten konkaven Umschlagbereich bewirken dabei die elastischen Rückstellkräfte des Backpapierstapels, dass dieser besser im Behälter zurückgehalten wird.

Bei weiteren Ausführungsformen können Backpapierstapel in aufeinanderfolgenden Umschlagsbereichen in beliebigen Kombinationen konvex und/oder konkav gebogen sein.

Bei weiteren alternativen Ausführungsformen kann zumindest ein Teil der Backpapierbogen gefalzt sein. Insbesondere können z.B. durch Zusammenpressen eines Stapels die jeweils inneren Backpapierbogen mit eher scharfkantigen Knicken versehen werden. Bei weiter aussenliegenden Backpapierbogen sind die Umschlagbereiche hingegen eher bogenförmig mit grösseren Biegeradien ausgebildet. Bei solchen Anordnungen kann der Platzbedarf der Bogen innerhalb des Behälters weiter reduziert werden.

Der Bewegungsspielraum des Backpapierstapels innerhalb des Behälters kann optional durch ein oder mehrere Begrenzungselemente eingeschränkt sein. Solche Begrenzungselemente sind mit der Behälterwandung verbundene Strukturen, beispielsweise Stege, Rippen oder Laschen, die von einer oder mehreren der Behälterwände in den von diesen Behälterwänden begrenzten Innenraum hineinragen. So kann z.B. ein neben der Entnahmeöffnung oder gegenüberliegend zur Entnahmeöffnung in den Behälter hineinragender Steg zum Positionieren eines Umschlagbereichs des Backpapierstapels bei der Entnahmeöffnung und/oder zum Begrenzen des Bewegungsspielraums von Abschnitten des Packpapierstapels genutzt werden.

Anhand einiger Figuren werden einige Ausführungsformen der Erfindung näher beschrieben. Dabei zeigen
- Figur 1: ein teilweise aufgeschnittener erster Backpapierspender,
- Figur 2: ein teilweise aufgeschnittener zweiter Backpapierspender,
- Figur 3: ein teilweise aufgeschnittener dritter Backpapierspender,
- Figur 4: ein teilweise aufgeschnittener vierter Backpapierspender.

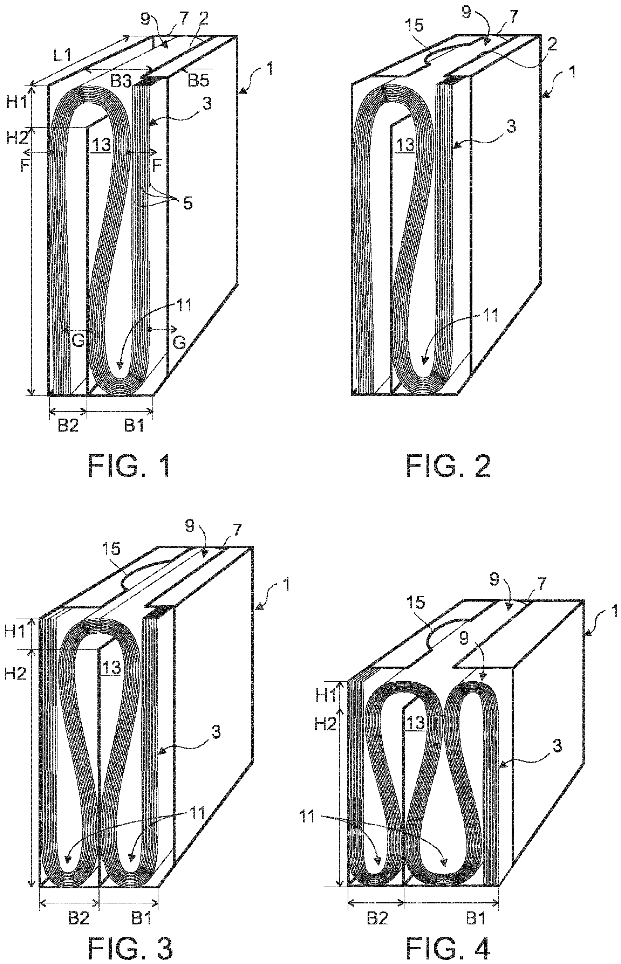

Die in den Figuren 1 bis 4 dargestellten Backpapierspender umfassen je einen Behälter 1, vorzugsweise eine Faltschachtel, und einen darin gelagerten, mehrfach umgeschlagenen Backpapierstapel 3. Der Backpapierstapel 3 umfasst bei maximal gefülltem Behälter 1 typischerweise etwa 100 oder 200 oder 250 einzelne Backpapierbogen 5. Selbstverständlich können Behälter 1 auch für andere Stückzahlen optimiert sein. Der Behälter 1 kann wie in den Figuren 1 bis 4 dargestellt quaderförmig mit sechs rechteckigen Wänden ausgebildet sein. Alternativ könnte der Behälter 1 auch eine andere Querschnittform aufweisen, z.B. einen Querschnitt in Gestalt eines Trapezes, insbesondere eines rechtwinkligen Trapezes.

Der Behälter 1 umfasst an der oberen Wand bzw. allgemein an einer der Wände eine Entnahmeöffnung 7, die sich im Wesentlichen über die gesamte Länge L1 des Behälters 1 erstreckt. Bei den in den Figuren 1 bis 4 dargestellten Ausführungsformen des Backpapierspenders wurde ein Erstnutzungsschutz, der die Entnahmeöffnung 7 vor der ersten Nutzung überdeckt bzw. verschlossen hat, bereits entfernt.

Die Länge L1, die Breite B1 und die Höhe H1 des Behälters 1 sind abgestimmt auf die jeweiligen Abmessungen des Backpapierstapels 3 und auf die Lagerungsart dieses Backpapierstapels 3 im Behälter 1. Sie werden so festgelegt, dass der Backpapierstapel 3 kompakt und mit ausreichend Spiel im Behälter 1 gelagert werden kann.

Der Backpapierstapel 3 kann z.B. 100 Backpapierbogen 5 mit den Abmessungen 32cm x 53cm umfassen. Wenn dieser Stapel 3 gemäss Figur 1 mit einem konvexen Umschlagbereich 9 und einem konkaven Umschlagbereich 11 in einem Behälter 1 gelagert sind, kann der Behälter 1 z.B. etwa folgende Aussenabmessungen haben: L1 = 33,5cm, H1 = 18cm, B1 = 5,6cm. Diese Abmessungen sind nur als Beispiel zu verstehen. Bei einer Ausführungsform des Spenders gemäss Figur 3 umfasst der Backpapierstapel 3 zusätzlich zum konvexen Umschlagbereich 9 bei der Entnahmeöffnung 7 zwei weitere, konkave Umschlagbereiche 11. Im Vergleich zur Ausführungsform gemäss Figur 1 ist die Höhe H1 des Behälters 1 etwas kleiner und dessen Breite B1 etwas grösser. Noch kompakter ist der in Figur 4 dargestellte Spender, bei dem der Backpapierstapel 3 im Behälter 1 insgesamt vier Umschlagbereiche 9, 11 umfasst. Gegenüber der Ausführungsform gemäss Figur 3 ist wiederum die Höhe H1 des Behälters 1 etwas kleiner und dessen Breite B1 etwas grösser.

Bei allen vier dargestellten Ausführungsformen umfasst der Behälter 1 eine Zwischenwand bzw. einen Steg 13, der mit der gegenüberliegend zur Entnahmeöffnung 7 angeordneten Wand des Behälters 1 verbunden ist und in den Behälter 1 hineinragt. Die Höhe H2 dieses Stegs 13 ist kleiner als die Höhe H1 des Behälters 1.

Ein Abschnitt des Backpapierstapels 3 ist im Bereich der Entnahmeöffnung 7 um den Steg 13 umgeschlagen. Der Steg 13 begrenzt den Bewegungsspielraum der benachbarten Abschnitte des Backpapierstapels 3 und positioniert den konvexen Umschlagbereich 9 des Backpapierstapels 3 bei der Entnahmeöffnung 7.

Beim in Figur 1 dargestellten Backpapierspender ist der Steg 13 in einem Abstand B2 von der linken Seitenwand mit der Bodenwand des Behälters 1 verbunden. Der Abstand B2 kann z.B. in der Grössenordnung von etwa 1/5 bis etwa 2/5 der gesamten Breite B1 des Behälters 1 liegen und insbesondere etwa 1/3 der Behälterbreite B1 betragen. Die Entnahmeöffnung 7 grenzt direkt an die linke Seitenwand an und hat eine Breite B3, die vorzugsweise etwa dem zweifachen Abstand B2 des Steges 13 von der linken Seitenwand entspricht. Rechts ist die Entnahmeöffnung 7 begrenzt durch eine Innenkante 2 eines an die rechte Seitenwand angrenzenden Deckwandabschnitts der Breite B5. Dieser Deckwandabschnitt ist ein Anschlag für die benachbarten Ränder der Backpapierbogen 5. Beim Herausziehen eines Backpapierbogens 5 durch die Entnahmeöffnung 7 kann der angrenzende Abschnitt des Backpapierstapels 3 durch formschlüssige Anlage am Deckwandabschnitt im Behälter 1 zurückgehalten werden. Falls der Behälter 1 wie in den Figuren 1 bis 4 mit obenliegender Entnahmeöffnung 7 angeordnet ist, trägt die auf den Backpapierstapel 3 wirkende Schwerkraft ebenfalls dazu bei, dass der Rest des Backpapierstapels 3 beim Herausziehen des äussersten Backpapierbogens 5 nach oben bzw. entgegen der Wirkrichtung der Schwerkraft im Behälter 1 bleibt.

Aufgrund der elastischen Spannkraft wird ein Abschnitt des Backpapierstapels 3 im oberen konvexen Umschlagbereich 9 mit einer Kraft F gegen den benachbarten Endabschnitt des Backpapierstapels 3 und gegen die benachbarte Behälterwand gedrückt. Der Endabschnitt des Backpapierstapels 3 kann so zuverlässig in seiner Lage gehalten werden.

In analoger Weise wird ein Abschnitt des Backpapierstapels 3 im unteren konkaven Umschlagbereich 11 mit einer Kraft G gegen den benachbarten Steg 13 und gegen die benachbarte Behälterwand gedrückt. Dies unterstützt das Zurückhalten des Backpapierstapels 3 im Behälter 1 beim Herausziehen eines Backpapierbogens 5 durch die Entnahmeöffnung 7.

Optional kann der Behälter 1 angrenzend an die Innenkante 2 des Deckwandabschnitts neben der Entnahmeöffnung 7 einen in den Behälter 1 hineinragenden Abschnitt bzw. Steg umfassen (nicht dargestellt). Dieser Abschnitt kann z.B. eine Lasche der Deckwand des Behälters 1 sein, die vor dem ersten Gebrauch des Spenders entlang einer trennbaren Perforationslinie mit angrenzenden Bereichen des Behälters 1 verbunden ist. Durch Trennen der Lasche entlang der Perforationslinie und anschliessendes Umklappen bzw. Einstecken in den Behälter 1 zwischen benachbarten Abschnitten des Backpapierstapels 3 werden der Steg und die Entnahmeöffnung 7 erstellt.

Analog zum Steg 13 an der gegenüberliegenden Wand bzw. am Behälterboden begrenzt der neben der Entnahmeöffnung 7 in den Behälter 1 hineinragende Abschnitt den Bewegungsspielraum der daran angrenzenden Abschnitte des Backpapierstapels 3. Die stirnseitigen Randabschnitte der Backpapierbogen 5 sind dadurch in einer Art Tasche im Behälter 1 gesichert. Dies ist insbesondere dann nützlich, wenn der Backpapierspender nicht wie in Figur 1 dargestellt stehend, sondern liegend verwendet wird, wobei die Entnahmeöffnung 7 an einer Seitenwand angeordnet ist.

Die Anordnung in Figur 2 unterscheidet sich von jener in Figur 1 im Wesentlichen dadurch, dass die Entnahmeöffnung 7 an beiden Längsseiten je von einem Abschnitt der Deckwand begrenzt ist, und dass der oben an den konvex gebogenen Umschlagbereich 9 des Backpapierstapels 3 angrenzende Abschnitt etwa in der Mitte eine Aussparung 15 umfasst, die das Ergreifen des äussersten Backpapierbogens 5 erleichtert. Dieser zusätzliche Abschnitt der Deckwand ist ein Anschlag, der beim Herausziehen eines Backpapierbogens 5 durch die Entnahmeöffnung 7 selbst bei liegendem Behälter 1 den umgeschlagenen Rest des Backpapierstapels 3 im Behälter 1 zurückhält.

Die Ausführungsform des Backpapierspenders gemäss Figur 3 unterscheidet sich von jener in Figur 2 dadurch, dass der Backpapierstapel 3 dreifach umgeschlagen im Behälter 1 gelagert ist. Entsprechend sind die Höhe H1 des Behälters 1 kleiner und dessen Breite B2 grösser als beim Behälter 1 gemäss Figur 2. Der Stegs 13 ist etwa in der Mitte zwischen den Seitenwänden des Behälters 1 angeordnet. Der Abstand B2 ist demnach halb so gross wie die Breite B1 des Behälters 1. Zwischen dem Steg 13 und den beiden gegenüberliegenden Seitenwänden ist je ein konkaver Umschlagbereich 11 des Backpapierstapels 3 gegenüberliegend zum konvexen Umschlagbereich 9 bei der Entnahmeöffnung 7 angeordnet.

Die Ausführungsform des Backpapierspenders gemäss Figur 4 unterscheidet sich von jener in Figur 2 dadurch, dass der Backpapierstapel 3 vierfach umgeschlagen im Behälter 1 gelagert ist. Neben dem konvexen Umschlagbereich 9 bei der Entnahmeöffnung 7 umfasst der Backpapierstapel 3 einen weiteren konvexen Umschlagbereich 9, der zumindest teilweise von einem Deckwandabschnitt überdeckt ist. Entsprechend sind die Höhe H1 des Behälters 1 kleiner und dessen Breite B2 grösser als beim Behälter 1 gemäss Figur 3. Der Abstand B2 des Steges 13 von der benachbarten Behälterwand ist kleiner als die Hälfte der Behälterbreite B1.

In analoger Weise können Backpapierspender auch mit mehr als vier Umschlagbereichen 9, 11 des im Behälter 1 gelagerten Backpapierstapels 3 ausgebildet sein. Im Weiteren können ein oder mehrere Begrenzungselemente, die jeweils zwischen benachbarten Lagen bzw. Abschnitten des mehrfach umgeschlagenen Stapels 3 in den Behälter 1 hineinragen, auch mit der stirnseitigen Vorderwand und/oder Rückwand des Behälters 1 verbunden sein.

Vorzugsweise ist das Verhältnis Höhe H1 zu Breite B1 bei Backpapierspendern mit oben am Behälter 1 angeordneter Entnahmeöffnung 7 in der Grössenordnung von etwa 1 bis etwa 4.

## Patentansprüche

1. Backpapierspender, umfassend einen Behälter (1) mit einer Entnahmeöffnung (7) und einen in diesem Behälter (1) gelagerten Stapel (3) Backpapierbogen (5), die dem Behälter (1) durch die Entnahmeöffnung (7) einzeln entnehmbar sind, **dadurch gekennzeichnet, dass** der Stapel (3) mindestens zweifach umgeschlagen im Behälter (1) gelagert ist, und dass die Entnahmeöffnung (7) benachbart zu einem konvexen Umschlagbereich (9) des Stapels (3) angeordnet ist, sodass ein zu entnehmender Backpapierbogen (5) im umgeschlagenen Bereich ergriffen und durch die Entnahmeöffnung (7) aus dem Behälter (1) herausgezogen werden kann.

2. Backpapierspender nach Anspruch 1, **dadurch gekennzeichnet, dass** der Behälter (1) eine Faltschachtel mit sechs einen Innenraum begrenzenden Wänden ist, und dass die Entnahmeöffnung (7) eine Ausnehmung an einer dieser Wände umfasst, die sich über die gesamte Länge (L1) dieser Wand erstreckt, und die mindestens auf einer Seite von einem Abschnitt dieser Wand begrenzt ist.

3. Backpapierspender nach Anspruch 2, **dadurch gekennzeichnet, dass** die Entnahmeöffnung (7) auf beiden Längsseiten durch Abschnitte der jeweiligen Wand begrenzt ist.

4. Backpapierspender nach Anspruch 3, **dadurch gekennzeichnet, dass** mindestens einer der an die Entnahmeöffnung (7) angrenzenden Wandabschnitte eine Aussparung (15) zum Erleichtern des Ergreifens des äussersten Backpapierbogens (5) umfasst.

5. Backpapierspender nach einem der Ansprüche 1 bis 4, **dadurch gekennzeichnet, dass** der Behälter (1) ein oder mehrere Begrenzungselemente zum Begrenzen des Bewegungsspielraums des Backpapierstapels im Inneren des Behälters (1) umfasst.

6. Backpapierspender nach Anspruch 5, **dadurch gekennzeichnet, dass** mindestens eines der Begrenzungselemente ein in den Behälter (1) hineinragender Steg (13) ist, der mit der gegenüberliegend zur Entnahmeöffnung (7) angeordneten Behälterwand verbunden ist, und dessen Höhe (H2) kleiner ist als die Behälterhöhe (H1).

7. Backpapierspender nach Anspruch 6, **dadurch gekennzeichnet, dass** der konvexe Umschlagbereich (9) des Stapels (3) bei der Entnahmeöffnung (7) um den Steg (13) umgeschlagen ist.

8. Backpapierspender nach einem der Ansprüche 5 bis 7, **dadurch gekennzeichnet, dass** mindestens eines der Begrenzungselemente ein Abschnitt des Behälters (1) ist, der an einem die Entnahmeöffnung (7) begrenzenden Wandabschnitt des Behälters (1) zwischen benachbarten Abschnitten des Stapels (3) in den Behälter (1) hineinragt.

9. Backpapierspender nach einem der Ansprüche 5 bis 8, **dadurch gekennzeichnet, dass** mindestens eines der Begrenzungselemente ein in den Behälter (1) ragender Abschnitt ist, der mit einer an die Wand mit der Entnahmeöffnung (7) angrenzenden stirnseitigen Wand des Behälters (1) verbunden ist.

10. Backpapierspender nach einem der Ansprüche 1 bis 9, wobei die Entnahmeöffnung (7) oben am Behälter (1) angeordnet ist, **dadurch gekennzeichnet, dass** das Verhältnis von Behälterhöhe (H1) zu Behälterbreite (B1) im Bereich von 1 bis 4 liegt.

## Claims

1. A baking paper dispenser, comprising a container (1) with a removal opening (7) and a stack (3) of baking paper sheets (5) stored in said container (1) which are individually removable from the container (1) through the removal opening (7), **characterized in that** the stack (3) is stored in the container (1) folded at least two-fold and that the removal opening (7) is arranged adjacent to a convex folding region (9) of the stack (3) such that a baking paper sheet (5) to be removed can be grasped and pulled out of the container (1) through the removal opening (7).

2. The baking paper dispenser according to Claim 1, **characterized in that** the container (1) is a folding box with six walls delimiting an inner space and that the removal opening (7) comprises a cutout at one of these walls, said cutout extending across the entire length (L1) of said wall and being delimited by a portion of said wall on at least one side.

3. The baking paper dispenser according to Claim 2, **characterized in that** the removal opening (7) is delimited on both long sides by portions of the respective wall.

4. The baking paper dispenser according to Claim 3, **characterized in that** at least one of the wall portions abutting the removal opening (7) comprises a recess (15) for facilitating the grasping of the outermost baking paper sheet (5).

5. The baking paper dispenser according to any one of the Claims 1 to 4, **characterized in that** the container (1) comprises one or several delimiting elements for delimiting the movement scope of the baking paper stack inside the container (1).

6. The baking paper dispenser according to Claim 5, **characterized in that** at least one of the delimiting elements is a ridge (13) protruding into the container (1), said ridge being connected to the container wall arranged opposite the removal opening (7) and having a height (H2) lower than the container height (H1).

7. The baking paper dispenser according to Claim 6, **characterized in that** the convex folding region (9) of the stack (3) is folded around the ridge (13) at the removal opening (7).

8. The baking paper dispenser according to any one of the Claims 5 to 7, **characterized in that** at least one of the delimiting elements is a portion of the container (1) protruding into the container (1) from a wall portion of the container (1) delimiting the removal opening (7) between adjacent portions of the stack (3) .

9. The baking paper dispenser according to any one of the Claims 5 to 8, **characterized in that** at least one of the delimiting elements is a portion protruding into the container (1) connected to a front-facing wall of the container (1) adjacent to the wall with the removal opening (7).

10. The baking paper dispenser according to any one of the Claims 1 to 9, wherein the removal opening (7) is arranged at the top of the container (1), **characterized in that** the ratio of container height (H1) to container width (B1) is in the range of 1 to 4.

## Revendications

1. Distributeur de papier de cuisson, comprenant un récipient (1) avec une ouverture de prélèvement (7) et une pile (3) de feuilles de papier de cuisson (5) stockées dans ce récipient (1), qui peuvent être prélevées individuellement du récipient (1) par l'ouverture de prélèvement (7), **caractérisé en ce que** la pile (3) est stockée dans le récipient (1) en étant rabattue au moins deux fois, et **en ce que** l'ouverture de prélèvement (7) est agencée au voisinage d'une zone de rabattement convexe (9) de la pile (3), de telle sorte qu'une feuille de papier de cuisson (5) à prélever peut être saisie dans la zone rabattue et extraite du récipient (1) par l'ouverture de prélèvement (7).

2. Distributeur de papier de cuisson selon la revendication 1, **caractérisé en ce que** le récipient (1) est une boîte pliante comportant six parois délimitant un espace intérieur, et **en ce que** l'ouverture de prélèvement (7) comprend un évidement sur l'une de ces parois, qui s'étend sur toute la longueur (L1) de cette paroi, et qui est délimité au moins d'un côté par une section de cette paroi.

3. Distributeur de papier de cuisson selon la revendication 2, **caractérisé en ce que** l'ouverture de prélèvement (7) est délimitée sur les deux côtés longitudinaux par des sections de la paroi respective.

4. Distributeur de papier de cuisson selon la revendication 3, **caractérisé en ce qu'**au moins l'une des sections de paroi adjacentes à l'ouverture de prélèvement (7) comprend une échancrure (15) pour faciliter la préhension de la feuille de papier de cuisson la plus extérieure (5).

5. Distributeur de papier de cuisson selon l'une quelconque des revendications 1 à 4, **caractérisé en ce que** le récipient (1) comprend un ou plusieurs éléments de délimitation pour délimiter l'espace de déplacement de la pile de papier de cuisson à l'intérieur du récipient (1).

6. Distributeur de papier de cuisson selon la revendication 5, **caractérisé en ce qu'**au moins l'un des éléments de délimitation est une barrette (13) faisant saillie à l'intérieur du récipient (1), reliée à la paroi du récipient agencée à l'opposé de l'ouverture de prélèvement (7), et dont la hauteur (H2) est inférieure à la hauteur du récipient (H1).

7. Distributeur de papier de cuisson selon la revendication 6, **caractérisé en ce que** la zone de rabattement convexe (9) de la pile (3) est rabattue autour de la barrette (13) près de l'ouverture de prélèvement (7) .

8. Distributeur de papier de cuisson selon l'une quelconque des revendications 5 à 7, **caractérisé en ce qu'**au moins l'un des éléments de délimitation est une section du récipient (1) qui fait saillie dans le récipient (1) sur une section de paroi du récipient (1) délimitant l'ouverture de prélèvement (7) entre des sections voisines de la pile (3).

9. Distributeur de papier de cuisson selon l'une quelconque des revendications 5 à 8, **caractérisé en ce qu'**au moins l'un des éléments de délimitation est une section faisant saillie dans le récipient (1), qui est reliée à une paroi frontale du récipient (1) adjacente à la paroi comportant l'ouverture de prélèvement (7).

10. Distributeur de papier de cuisson selon l'une quelconque des revendications 1 à 9, dans lequel l'ouverture de prélèvement (7) est agencée en haut du récipient (1), **caractérisé en ce que** le rapport entre la hauteur du récipient (H1) et la largeur du récipient (B1) est compris entre 1 et 4.
